**Europäisches Patentamt**

**European Patent Office**

**Office européen des brevets**

(11) Veröffentlichungsnummer:

**0 047 561**
A1

(12) **EUROPÄISCHE PATENTANMELDUNG**

(21) Anmeldenummer: 81200984.3

(22) Anmeldetag: 03.09.81

(51) Int. Cl.³: **G 01 S 1/30**, G 01 S 5/10

(30) Priorität: **10.09.80 CH 6795/80**

(71) Anmelder: **BBC Aktiengesellschaft Brown, Boveri & Cie., CH-5401 Baden (CH)**

(43) Veröffentlichungstag der Anmeldung: **17.03.82 Patentblatt 82/11**

(84) Benannte Vertragsstaaten: **CH DE FR GB LI NL SE**

(72) Erfinder: **Snedkerud, Ole, Pestalozzistrasse 6, CH-5200 Windisch (CH)**

(54) Verfahren zum Bestimmen des Ortes eines mobilen Objektes.

(57) Bei dem neuen Verfahren werden zur Bestimmung des Orts eines Objekts (17) zwei Schwebungen genutzt, deren Wandergeschwindigkeit längt einer zugeordneten Referenzgeraden (U.a. 12) aus den Frequenzen der die Schwebungen erzeugenden Wellen und deren Ort mit gleicher Phasenlage aus den Quellen (U.a. 10, 11) dieser Wellen errechenbar ist. Zur Ortsbestimmung werden die Laufzeiten vorgegebener Phasenwinkel mindestens zweier Schwebungen von einem Bezugsort (13) zum Ort des Objekts (17) gemessen und daraus diejenigen Bezugslinien bestimmt, auf deren Kreuzungspunkt der Ort des Objekts liegt.

-1-

## Verfahren zum Bestimmen des Ortes eines mobilen Objekts

Die vorliegende Erfindung betrifft ein Verfahren zum Bestimmen des Ortes eines mobilen Objekts mittels von mindestens zwei ortsfesten Sendestationen ausgesandten funktechnischen Signalen.

Funkortungsverfahren sind bisher insbesondere für See- und Luftfahrzeuge und für die Standortbestimmung innerhalb sehr grosser Gebiete entwickelt worden. Bei diesen Verfahren werden die von zwei und vorzugsweise drei Sendestationen ausgesandten Signale empfangen und ausgewertet. Bei einem ersten gebräuchlichen Verfahren (Loran) werden synchronisierte Impulse ausgesandt und die Zeitdifferenz der empfangenen Impulse gemessen, bei einem zweiten gebräuchlichen Verfahren (Decca) werden frequenz- und phasensynchronisierte Dauersignale ausgesandt, und es wird die Phasendifferenz der empfangenen Signale gemessen. Für beide Verfahren gilt, dass die Orte, an denen die empfangenen Signale die gleiche Zeit- bzw. Phasendifferenz aufweisen, auf einem Hyperbelast liegen, für den einer der beiden Sender der Brennpunkt ist. Die geforderte Synchronisierung der ausgesandten Signale bewirkt, dass die Hyperbeläste ortsfest sind und Standlinien bilden, die auf einer Landkarte eingetragen werden können. Zur Ortsbestimmung werden dann auf einer geeigneten Karte die den gemessenen Zeit- bzw. Phasendifferenzen entsprechenden Standlinien bestimmt, wobei der Schnittpunkt zweier Standlinien den momentanen Standort des Empfängers angibt.

Inzwischen besteht auch die Notwendigkeit nach Verfahren zur Standortbestimmung innerhalb begrenzter Gebiete, beispielsweise längs der Küste, in grossen Häfen, zur Führung von Rettungsfahrzeugen, von Feuerwehr und Polizei oder für die Ueberwachung und Leitung des öffentlichen Verkehrs auf Vororts- und Ueberlandstrecken. Für solche Anwendungen sind die oben beschriebenen Verfahren nicht geeignet. Diese erfordern wegen der unumgänglichen Synchronisierung eine eigene Senderkette und sind darum rein materiell sehr aufwendig und teuer. Ausserdem sollte die Standortbestimmung wegen der Verzerrung von UKW-Signalen in Bodennähe nach Möglichkeit mit Frequenzen im Mittel- und Langwellenbereich durchgeführt werden, was ohne Störung durch bereits erstellte Rundfunksender praktisch nicht mehr möglich ist. Schliesslich beträgt die Genauigkeit der Standortbestimmung mit den genannten Verfahren bei vertretbarem technischen Aufwand bestenfalls $\pm$ 300 m, was beispielsweise für die Führung eines Rettungshelikopters im Gebirge nicht ausreicht.

Der vorliegenden Erfindung liegt darum die Aufgabe zugrunde, ein Verfahren zum Bestimmen des momentanen Standorts eines mobilen Objekts zu schaffen, das keine neue Senderkette benötigt, dessen Messfrequenzen in bereits genutzte, aber für den vorgesehenen Zweck optimal geeignete Frequenzbänder integriert werden können und das mit vergleichsweise geringem technischen Aufwand eine bisher nicht erreichbare Genauigkeit der Standortbestimmung ermöglicht.

Erfindungsgemäss wird diese Aufgabe mit einem Verfahren gelöst, das dadurch gekennzeichnet, ist, dass die Signale direkt oder indirekt ein Feld elektromagnetischer Schwebungen erzeugen, deren phasengleiche Abschnitte mit vorgegebener Geschwindigkeit auf konfokalen Hyperbelästen von der einen zur anderen, je einen Brennpunkt der zugeordneten Hyperbeln bildenden Sendestation wandern und die Zeitdifferenz zwischen dem Durchlauf eines definierten Phasenabschnitts einer Schwebung an einem Bezugsort, dessen Lage relativ zu den beiden Sendestationen durch einen Bezugshyperbelast bestimmt ist, sowie am Ort des mobilen Objekts gemessen und daraus der diesen Ort schneidende Hyperbelast bestimmt wird.

Bei einer bevorzugten Ausführungsform des neuen Verfahrens werden mittels drei Sendestationen drei Felder elektromagnetischer Schwebungen erzeugt. Für die vorgesehene Anwendung genügt es, wenn zwei dieser Felder ausgewertet werden, wozu für jedes der zwei Felder die oben definierte Zeitdifferenz gemessen und daraus zwei Hyperbeläste bestimmt werden, deren Schnittpunkt dem Ort des mobilen Objekts entspricht.

Das neue Verfahren benötigt kein eigenes Sendernetz mit einem zugeordneten Frequenzband, sondern kann mit Signalen durchgeführt werden, die auf die Trägerwelle bestehender Rundfunksender aufmoduliert werden, ohne das Rundfunkprogramm zu beeinträchtigen. Bei der Verwendung von Trägerwellen im Mittel- oder Langwellenbereich sind auch in Bodennähe weder Verzerrungen noch Reflexionen zu erwarten, was eine grosse Genauigkeit bei der Messung der Zeitdifferenz und der daraus abgeleiteten Bestimmung des Standorts des mobilen Objekts ermöglicht. Die Signale müssen nicht synchronisiert sein, was die Anlage zur Ausführung des Verfahrens wesentlich vereinfacht und verbilligt. Bei geeigneter Wahl der Frequenzen der verwendeten Signale ist es möglich, eine Wandergeschwindigkeit der Schwebungen zu erzeugen, die die Bestimmung des Standorts eines mobilen Objekts mit einer Genauigkeit von bis zu $\pm$ 2 m ermöglicht. Das Verfahren ist nicht nur für die Selbstortung geeignet, sondern ermöglicht durch Aussenden der Ortungssignale an einen zentralen Empfänger auch die Fernüberwachung und -leitung eines beweglichen Objekts.

Nachfolgend werden ein vereinfachtes Beispiel des neuen
Verfahrens und eine zu dessen Ausführung geeignete Anlage
mit Hilfe der Figuren beschrieben. Es zeigen:

Fig. 1 die schematische Darstellung einer zwischen zwei
    Sendern wandernden Schwebung sowie der Bestimmung
    der Entfernung zwischen zwei Orten aus der Wanderzeit der Schwebung und

Fig. 2 das Schema einer Anlage zur Ausführung des Verfahrens.

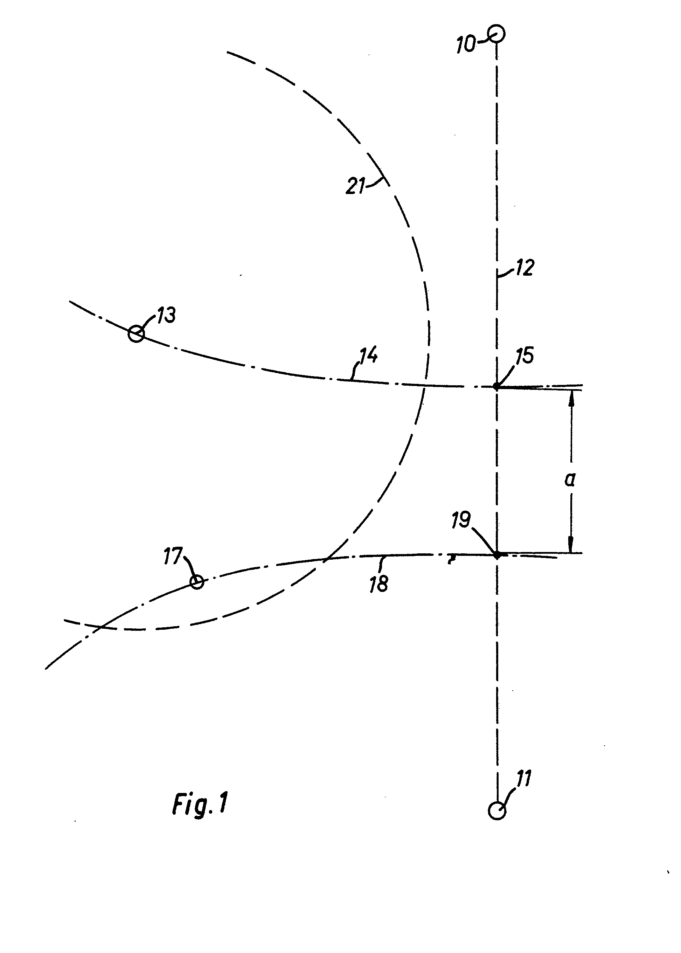

In Fig. 1 sind zwei Sender 10, 11 gezeigt, die elektromagnetische Wellen aussenden, die sich auf konzentrischen
Kreisen um den jeweiligen Sender ausbreiten. Wenn die ausgesandten Wellen frequenz- und phasensynchron sind, dann
überlagern sie sich zu einem Feld stehender Wellen, deren
phasengleiche Teile eine symmetrische Schar konfokaler Hyperbeln bilden, für die die Sender die Brennpunkte sind.
Diese Erscheinung wird bei dem eingangs erwähnten Funkortungsverfahren mit einer Hyperbel als Standlinie praktisch
genutzt. Sind die ausgesandten Wellen weder frequenz- noch
phasensynchronisiert und beträgt der Unterschied zwischen
den beiden Frequenzen nur wenige Hertz, dann überlagern
sich die Wellen zu Schwebungen, deren Nulldurchgang auf einer unendlichen Anzahl konfokaler Hyperbeln von dem einen
Sender zum anderen wandern. Wenn die Frequenzen der beiden
ausgesandten Wellen mit $f_1$ und $f_2$ bezeichnet werden, dann
gilt für die Frequenz der Schwebung die bekannte Gleichung:
$f_s = f_1 - f_2$ und für die Wandergeschwindigkeit des Nulldurchgangs der Schwebung längs der Verbindungsgeraden 12 zwischen den beiden Sendern, die der Hauptachse der Hyperbel entspricht, die ebenfalls bekannte Beziehung

$$v_s = c \, \frac{f_1 - f_2}{f_1 + f_2}$$

worin c für die Ausbreitungsgeschwindigkeit der elektromagnetischen Wellen steht, die bekanntlich gleich der Lichtgeschwindigkeit ist.

Die Figur zeigt weiter eine Kontrollstation 13, sowie einen durch diese Kontrollstation (und um den Sender 10 als Brennpunkt) verlaufenden Hyperbelast 14, der die Verbindungsgerade 12 im Punkt 15 schneidet. Ausserdem ist ein mobiles Objekt, das im folgenden kurz als Mobilstation 17 bezeichnet wird, gezeigt. Durch die Mobilstation verläuft ein Hyperbelast 18, der die Verbindungsgerade im Punkt 19 schneidet.

Es versteht sich, dass alle von der Verbindungsgeraden 12 beabstandeten und auf einem Hyperbelast liegenden phasengleichen Punkte einer von dem einen Sender zum anderen wandernden Schwebung Bahnen durchlaufen, die länger sind als die Verbindungsgerade, weshalb die in der Fortbewegungsrichtung gemessene Bahngeschwindigkeit jedes Punktes mit zunehmendem Abstand von der Verbindungsgeraden grösser wird. Das hat zur Folge, dass die Zeitdifferenz $\Delta\tau_{13,\,17}$ zwischen dem Zeitpunkt $\tau_{13}$, an dem der Nulldurchgang einer Schwebung durch den Ort der Kontrollstation 13 wandert, und dem Zeitpunkt $\tau_{17}$, an dem der gleiche Nulldurchgang durch den Ort der Mobilstation 17 wandert, gleich der Zeitdifferenz $\Delta\tau_{15,\,19}$ ist, innert der der gleiche Nulldurchgang der Schwebung längs der Verbindungsgeraden 12 vom Schnittpunkt 15 zum Schnittpunkt 19 wandert.

302/80

0047561

Wenn der Ort der beiden Sender 10, 11 und der der Kontrollstation 13 bekannt sind, ermöglicht die Definition der Hyperbel als der geometrische Ort aller Punkte, für die die Differenz des Abstands von den beiden Brennpunkten (das sind bei der vorliegenden Betrachtung die beiden Sender) konstant ist, die einfache Bestimmung des Punktes 15, in dem der durch den Ort der Kontrollstation 13 verlaufende Hyperbelast 14 die Verbindungsgerade 12 schneidet. Wenn zusätzlich die Frequenzen der von den beiden Sendern ausgesandten Wellen bekannt sind und die Zeitdifferenz zwischen dem Durchgang des Nullpunkts der Schwebung durch den Ort der Kontrollstation 13 und den Ort einer Mobilstation 17 gemessen wird, dann lässt sich aus der Beziehung

$$a = v_s \Delta \tau = \Delta \tau_{13, \, 17} \cdot c \cdot \frac{f_1 - f_2}{f_1 + f_2}$$

der Abstand des Punktes vom Schnittpunkt 15 errechnen und damit der durch den Ort der Mobilstation verlaufende Hyperbelast 18 bestimmen.

Für die Bestimmung des Orts der Mobilstation auf dem Hyperbelast 18 ist dann das Errechnen einer weiteren Hilfslinie erforderlich, die den Hyperbelast 18 im Ort der Mobilstation schneidet. Dazu wird ein zweites Feld elektromagnetischer Wellen verwendet, das ebenfalls Schwebungen bildet und in dessen Ausbreitungsbereich die Kontrollstation und die Mobilstation liegen. Einfacherweise kann für dieses zweite Wellenfeld nur ein zusätzlicher Sender verwendet werden, der mit einem der bereits beschriebenen Sender zusammenwirkt. Dieser zusätzliche dritte Sender wird vorzugsweise so gewählt, dass seine Verbindungsgerade zu dem zugeordneten Sender die Verbindungsgerade zwischen den beiden ersten Sendern in einem möglichst stumpfen Winkel schneidet. Dann schneiden sich auch die Hyperbeläste des zweiten Schwebungsfelds in einem stumpfen Winkel mit den Hyperbelästen des ersten Schwebungsfelds, was eine optimale Bestimmung des Orts der Mobilstation ermöglicht.

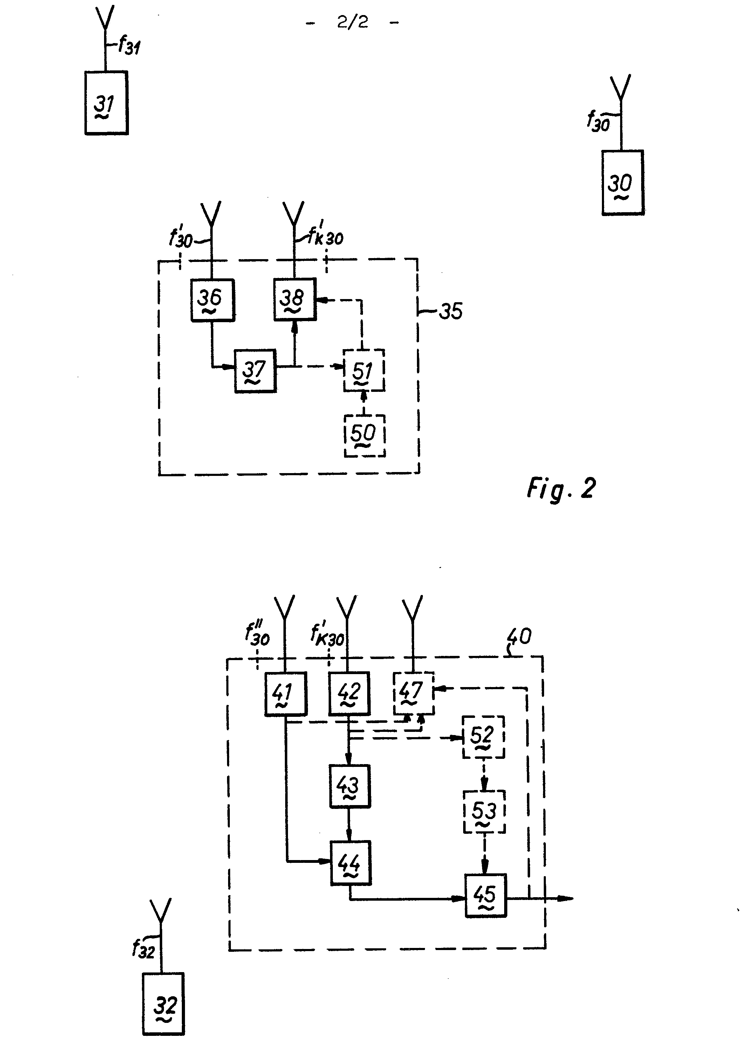

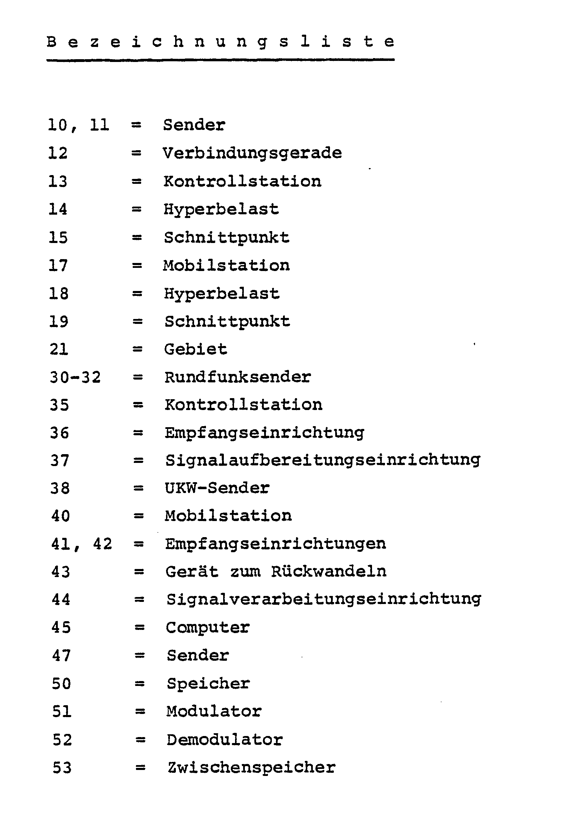

In Fig. 2 ist schematisch eine Anlage gezeigt, mit der unter Anwendung der obigen Ueberlegungen der Ort einer Mobilstation festgestellt werden kann. Zur Anlage gehören drei
stationäre Rundfunksender 30, 31, 32, die auf den vorzugsweise im Mittel- oder Langwellenbereich liegenden, amplitudenmodulierten Trägerfrequenzen $F_{30}$, $F_{31}$ bzw. $F_{32}$ beispielsweise ein Hörfunkprogramm senden. Für die hier interessierende Anwendung wird jede dieser Trägerwellen mit einer Ortungsfrequenz $f_{30}$, $f_{31}$, $f_{32}$ frequenzmoduliert. Die Ortungsfrequenz liegt vorzugsweise in einem Bereich zwischen 10
bis 30 Hz, um das Hörfunkprogramm nicht merklich zu beeinträchtigen. Der geografische Abstand zwischen den Sendern
kann sehr gross sein, solange es ein Gebiet gibt, in dem
alle drei Sender gut empfangen werden.

Zur Anlage gehört weiter eine ortsfeste Kontrollstation 35,
die in dem genannten Empfangsgebiet installiert ist. Die
Kontrollstation enthält eine Empfangseinrichtung 36, mit
der die drei Rundfunksender empfangen und die Ortungsfrequenzen $f'_{30}$, $f'_{31}$, $f'_{32}$ demoduliert werden können. Weiter
enthält die Kontrollstation eine Signalaufbereitungseinrichtung 37, die die demodulierten Ortungsfrequenzen in
vorgegebene Harmonische oder andere von den Ortungsfrequenzen unterscheidbare Ortungshilfsfrequenzen $f'_{k30}$, $f'_{k31}$ und
$f'_{k32}$ wandelt. Schliesslich enthält die Kontrollstation
noch einen UKW-Sender 38, dessen Trägerwelle $F_{38}$ mit den
drei Ortungshilfsfrequenzen moduliert wird.

Das Empfangsgebiet des UKW-Senders bestimmt das Gebiet 21
(Fig. 1), in dem eine Ortsbestimmung möglich ist.

Die Mobilstation 40 benötigt zwei Empfangseinrichtungen 41, 42, mit denen die drei Rundfunksender bzw. der UKW-Sender empfangen werden können. Die eine für den Empfang der Rundfunksender vorgesehene Empfangseinrichtung 41 kann gleichartig aufgebaut sein wie die entsprechende Empfangseinrichtung 36 in der Kontrollstation und liefert wie diese an getrennten Ausgängen die drei empfangenen Ortungsfrequenzen $f''_{30}$, $f''_{31}$, $f''_{32}$. Die andere für den Empfang des UKW-Senders 38 vorgesehene Empfangseinrichtung 42 enthält einen Demodulator, an dessen drei Ausgängen die Ortungshilfsfrequenzen $f'_{k30}$, $f'_{k31}$ und $f'_{k32}$ erscheinen. Dieser UKW-Empfangseinrichtung ist ein Gerät 43 zum Rückwandeln der Ortungshilfsfrequenzen in die von der Kontrollstation empfangenen Ortungsfrequenzen $f'_{30}$, $f'_{31}$ und $f'_{32}$ nachgeschaltet. Die Ausgänge der Empfangseinrichtung 41 und des Geräts 43 sind mit zugeordneten Eingängen einer Signalverarbeitungseinrichtung 44 verbunden.

Die Genauigkeit der Ortsbestimmung ist von der Wandergeschwindigkeit der Schwebungen bzw. dem zeitlichen Abstand zwischen dem Durchlauf zweier aufeinanderfolgender und einander entsprechender Phasenabschnitte und beispielsweise des Nulldurchgangs der Schwebung an einem gegebenen Ort sowie von der Genauigkeit der Bestimmung dieses zeitlichen Abstands abhängig. Wie gezeigt werden konnte, ermöglicht eine Schwebungsfrequenz im Kilohertzbereich eine für die vorgesehene Anwendung hinreichende Genauigkeit der Ortsbestimmung, und ihr Nulldurchgang kann mit vertretbarem schaltungstechnischen Aufwand gemessen werden.

Der Signalverarbeitungseinrichtung 44 ist ein Computer 45 nachgeschaltet. Im Computer werden die von der Kontrollstation und der Mobilstation empfangenen Ortungsfrequenzen $f'_{30}$ ... bzw. $f''_{30}$ ... durch Multiplikation mit vorgegebe-

nen konstanten Faktoren in Messfrequenzen $n_1 f'_{30}$, $n_2 f'_{31}$ ... bzw. $n_1 f''_{30}$, $n_2 f''_{31}$ ... transponiert, die in dem zur Auswertung bevorzugten Frequenzbereich liegen. Weiter werden im Computer aus den transponierten Ortungsfrequenzen Differenzen gebildet: $n_1 f'_{30} - n_2 f'_{30} = \Delta f'_{30, 31}$; $n_1 f'_{30} - n_3 f'_{32} = \Delta f'_{30, 32}$ sowie $n_1 f''_{30} - n_2 f''_{31} = \Delta f''_{30, 31}$; $n_1 f''_{30} - n_3 f''_{32} = \Delta f''_{30, 32}$, die die Frequenzen der von den Ortungsfrequenzen 30, 31 und 30, 32 am Ort der Kontrollstation bzw. der Mobilstation erzeugten Schwebungen angeben. Aus diesen transponierten Ortungsfrequenzdifferenzen errechnet der Computer schliesslich den Momentanwert der Phasenlage der einander entsprechenden Schwebungen am Ort der Kontroll- und der Mobilstation und daraus die Laufzeit der Nullpunkte der diesen Differenzen entsprechenden Schwebungen zwischen den beiden Orten.

Die Auswertung der errechneten Laufzeiten kann auf verschiedene Arten erfolgen. Im einfachsten Fall werden die Laufzeiten vom Computer ausgegeben, und es wird eine Landkarte verwendet, auf der die Verbindungslinien zwischen den Sendern 30, 31 und den Sendern 30, 32 sowie zugeordnete Hyperbeläste eingetragen sind. Die beiden Hyperbeläste, die die Kontrollstation schneiden (und von denen in Fig. 2 nur der eine Ast 14 gezeigt ist), bilden die Bezugshyperbeläste und sind vorzugsweise durch ihre grafische Darstellung hervorgehoben. Jeder der anderen Hyperbeläste ist mit einer Zeitmarke identifiziert. Diese gibt die Zeitspanne an, die der Nulldurchgang der von den zugeordneten Ortungsfrequenzen gebildeten und längs der Verbindungslinie wandernden Schwebung vom Schnittpunkt der Verbindungslinie mit dem Bezugshyperbalast bis zum Schnittpunkt der Verbindungslinie mit dem markierten Hyperbelast benötigt. Eine Bedienungsperson sieht dann aus dem Schnittpunkt der beiden Hyperbeläste, deren Markierungen mit den vom Computer errechneten Zeitdifferenzen übereinstimmen, den momentanen Standort der Mobilstation.

Es ist natürlich auch möglich, einen Computer zu verwenden, der anstelle der Zeitdifferenzen die Koordinaten der Mobilstation entweder absolut oder relativ zu einem anderen Ort, beispielsweise zur Kontrollstation, errechnet und ausgibt.

Bei der Verwendung der beschriebenen Anlage zur Führung eines Fahrzeugs muss die Mobilstation noch mit einem Sender 47 bestückt werden, der die errechneten Koordinaten an die Führungsstation weitergibt. Bei einer solchen Anlage ist es aber auch möglich, die von der Mobilstation empfangenen Ortungs- und Ortungshilfssignale zu transponieren und unverarbeitet wieder auszusenden und die Verarbeitung und Auswertung in der Führungsstation auszuführen.

Das Empfangsgebiet der Mittel- und Langwellensender 30, 31, 32 ist im allgemeinen sehr viel grösser als das des UKW-Senders der Kontrollstation 35. Daraus kann sich die Notwendigkeit ergeben, im Empfangsgebiet der Mittel- oder Langwellensender mehrere Kontrollstationen vorzusehen und für jede Kontrollstation eine Karte mit den zugeordneten Hyperbelästen zu erstellen. Dann ist auch darauf zu achten, dass die ursprünglichen Ortungsfrequenzen in benachbarten Kontrollstationen, deren Empfangsbereiche sich teilweise überlagern, in unterscheidbare Ortungshilfsfrequenzen gewandelt werden. Vorteilhafterweise wird dann die elektronische Ausrüstung in jeder Kontrollstation durch einen Speicher 50 ergänzt, in dem die Daten aller die Kontrollstation betreffenden Parameter gespeichert sind, sowie durch einen Modulator 51, der diese Daten auf die auszusendenden Ortungshilfsfrequenzen aufmoduliert. In der Mobilstation ist dann ein zusätzlicher Demodulator 52 erforderlich, der aus den empfangenen Ortungshilfsfrequenzen die Daten der die spezielle Kontrollstation betreffenden Parameter zurückgewinnt und in einen Zwischenspeicher 53 einspeichert, wo sie vom Computer abgerufen werden.

Bei der oben beschriebenen Anlage erstrecken sich zwischen den drei Mittel- oder Langwellensendern drei Verbindungslinien, und es gibt längs jeder Verbindungslinie eine Schar Hyperbeläste. Für eine Ortsbestimmung sind jedoch nur zwei Scharen Hyperbeläste erforderlich, und die Auswertung der dritten Schar führt zu einer Ueberbestimmung.

Wie bereits oben erwähnt wurde, liegen die Frequenzen der Ortungssignale vorzugsweise im Bereich zwischen 10 bis 30 Hz. Wenn einer der drei Rundfunksender ein Stereoprogramm aussendet, dann kann einfacherweise der Stereopilotton als Ortungssignal verwendet und auf ein zusätzliches Ortungssignal verzichtet werden. Das gleiche gilt für einen Zeit-Frequenznormal-Sender.

Die mit dem neuen Verfahren erreichbare Messgenauigkeit der Ortsbestimmung ist natürlich von der Konstanz der Ortungsfrequenzen sowie von der Genauigkeit der Bestimmung der Laufzeit des Nulldurchgangs der Schwebung durch den Ort der Kontroll- und der Mobilstation abhängig. Dazu sei nochmals darauf hingewiesen, dass bei dem neuen Verfahren die Phasenlage einer mit bekannter Geschwindigkeit wandernden Schwebung ausgewertet wird, weshalb die verschiedenen Verarbeitungsschritte so auszuführen sind, dass auch aus den verarbeiteten Signalen die Phasenlage der ursprünglichen Ortungssignale zurückgewonnen werden kann.

Es konnte gezeigt werden, dass bei geeigneter Wahl der Messfrequenzen entsprechend einer Wandergeschwindigkeit des Nullpunkts der Schwebung von etwa 40 km/s und bei einer Messgenauigkeit des Nulldurchgangs von etwa 0,1 ms der Ort einer unbewegten Mobilstation mit einer Genauigkeit von etwa 5 m bestimmt werden kann.

Bei einer bewegten Mobilstation tritt ein Ortungsfehler auf, weil sich die Mobilstation innert der zur Ortsbestimmung erforderlichen Zeitspanne weiterbewegt. Wird die Ortsbestimmung bei einer Geschwindigkeit der Mobilstation von 180 km/h durchgeführt, dann beträgt der durch die Fortbewegung bedingte Fehler im Mittel $\pm 3$ bis $\pm 6$ m, maximal $\pm$ 6 bis $\pm 12$ m.

In allen obigen Betrachtungen ist die Ausbreitungsgeschwindigkeit der elektromagnetischen Wellen und insbesondere die Uebertragungszeit der Ortungsfrequenzen von der Kontrollzur Mobilstation nicht berücksichtigt. Mit entsprechenden Berechnungen kann nämlich gezeigt werden, dass der durch diese Vernachlässigungen bedingte Fehler kleiner ist als die durch die Toleranzen der verwendeten Geräte oder die erwähnte Bewegung der Mobilstation erzeugten Fehler.

Im beschriebenen Beispiel liegt der Schnittpunkt 19 des durch die Mobilstation verlaufenden Hyperbelastes 18 mit der Verbindungslinie 12 zwischen dem Schnittpunkt 15 und dem Sender 11. Auf der Verbindungsgeraden gibt es einen weiteren, nicht gezeigten Punkt, der zwischen dem Schnittpunkt 15 und dem Sender 10 liegt und der ebenfalls den Abstand a vom Schnittpunkt 15 aufweist. Wie jedem Fachmann bekannt ist, lässt sich aus der Phasendifferenz der Ortungs- bzw. Messignale bestimmen, ob der Abstand a auf der Verbindungsgeraden 12 zwischen dem Schnittpunkt 15 und dem Sender 10 oder dem Sender 11 liegt, weshalb die Ortsbestimmung eindeutig ist.

0047561

Die zur Ausführung des neuen Verfahrens erforderliche Anlage kann mit handelsüblichen Bauelementen zusammengestellt
werden, weshalb auf deren detaillierte Beschreibung hier
ausdrücklich verzichtet wird.

-14-

Patentansprüche

1. Verfahren zum Bestimmen des Ortes eines mobilen Objekts mittels von mindestens zwei ortsfesten Sendestationen ausgesandten funktechnischen Signalen, dadurch gekennzeichnet, dass die Signale direkt oder indirekt ein Feld elektromagnetischer Schwebungen erzeugen, deren phasengleiche Abschnitte mit vorgegebener Geschwindigkeit auf konfokalen Hyperbelästen von der einen zur anderen, je einen Brennpunkt der zugeordneten Hyperbeln bildenden Sendestation wandern und die Zeitdifferenz zwischen dem Durchlauf eines definierten Phasenabschnitts einer Schwebung an einem Bezugsort, dessen Lage relativ zu den beiden Sendestationen durch einen Bezugshyperbelast bestimmt ist, sowie am Ort des mobilen Objekts gemessen und daraus der diesen Ort schneidende Hyperbelast bestimmt wird.

2. Verfahren nach Anspruch 1, dadurch gekennzeichnet, dass die Wandergeschwindigkeit der phasengleichen Abschnitte der Schwebungen längs der die Hauptachse der Hyperbel bildenden Verbindungsgeraden zwischen den Sendestationen aus der Frequenzendifferenz der funktechnischen Signale errechnet wird und die gemessene Zeitdifferenz und der Abstand zwischen dem Schnittpunkt des Bezugshyperbelasts und dem den Ort des mobilen Objekts schneidenden Hyperbelast mit der Verbindungslinie aus der errechneten Wandergeschwindigkeit und der gemessenen Zeitdifferenz bestimmt wird.

3. Verfahren nach Anspruch 1, dadurch gekennzeichnet, dass als definierter Phasenabschnitt der Schwebungen deren Nulldurchgang verwendet wird.

4. Verfahren nach Anspruch 1, dadurch gekennzeichnet, dass mittels drei Sendestationen zwei Felder elektromagnetischer Schwebungen erzeugt werden und für jedes Feld die Zeitdifferenz gemessen und daraus zwei Hyperbeläste bestimmt werden, deren Schnittpunkt dem Ort des mobilen Objekts entspricht.

5. Verfahren nach Anspruch 4, dadurch gekennzeichnet, dass Sendestationen gewählt werden, deren die Hauptachsen der Hyperbeln bildende Verbindungslinien einen stumpfen Winkel einschliessen.

6. Verfahren nach Anspruch 1, dadurch gekennzeichnet, dass die funktechnischen Signale den Trägerwellen von Rundfunksendern aufmoduliert werden.

7. Verfahren nach Anspruch 1, dadurch gekennzeichnet, dass die funktechnischen Signale am Bezugsort und am Ort des mobilen Objekts empfangen und vom Bezugsort, gegebenenfalls nach einer vorgängigen Transposition, zu dem mobilen Objekt übertragen und dort die Zeitdifferenz zwischen den Nulldurchgängen der Schwebungen am Bezugsort und am Ort des mobilen Objekts gemessen wird.

8. Verfahren nach Anspruch 1, dadurch gekennzeichnet, dass die funktechnischen Signale am Bezugsort und am Ort des mobilen Objekts empfangen und, gegebenenfalls nach einer vorgängigen Transposition, an eine Leitstelle übertragen und dort die Zeitdifferenz zwischen den Nulldurchgängen der Schwebungen am Bezugsort und am Ort des mobilen Objekts gemessen wird.

9. Verfahren nach Anspruch 2, dadurch gekennzeichnet, dass am Bezugsort der Nulldurchgang der Schwebung bestimmt und bei jedem Nulldurchgang ein Zeitsignal an das mobile Objekt oder an die Leitstelle übertragen wird.

10. Verfahren nach Anspruch 2, dadurch gekennzeichnet, dass für die Signalübertragung von dem Bezugsort zu dem mobilen Objekt oder zur Leitstelle eine Sendestation im UKW-Bereich verwendet wird.

Fig.1

Fig. 2

0047561

- 2/2 -

# B e z e i c h n u n g s l i s t e

| | | |
|---|---|---|
| 10, 11 | = | Sender |
| 12 | = | Verbindungsgerade |
| 13 | = | Kontrollstation |
| 14 | = | Hyperbelast |
| 15 | = | Schnittpunkt |
| 17 | = | Mobilstation |
| 18 | = | Hyperbelast |
| 19 | = | Schnittpunkt |
| 21 | = | Gebiet |
| 30-32 | = | Rundfunksender |
| 35 | = | Kontrollstation |
| 36 | = | Empfangseinrichtung |
| 37 | = | Signalaufbereitungseinrichtung |
| 38 | = | UKW-Sender |
| 40 | = | Mobilstation |
| 41, 42 | = | Empfangseinrichtungen |
| 43 | = | Gerät zum Rückwandeln |
| 44 | = | Signalverarbeitungseinrichtung |
| 45 | = | Computer |
| 47 | = | Sender |
| 50 | = | Speicher |
| 51 | = | Modulator |
| 52 | = | Demodulator |
| 53 | = | Zwischenspeicher |

**Europäisches Patentamt**

**EUROPÄISCHER RECHERCHENBERICHT**

0047561
Nummer der Anmeldung

EP 81 20 0984

| | EINSCHLÄGIGE DOKUMENTE | | KLASSIFIKATION DER ANMELDUNG (Int. Cl.³) |
|---|---|---|---|
| Kategorie | Kennzeichnung des Dokuments mit Angabe, soweit erforderlich, der maßgeblichen Teile | betrifft Anspruch | |
| X | US - A - 2 148 267 (E.A.H. HONORE)<br>* Seite 1, rechte Spalte, Zeile 3 - Seite 2, rechte Spalte, Zeile 32; Seite 2, rechte Spalte, Zeile 71 - Seite 3, linke Spalte, Zeile 27; Figuren 1-3A,4 * | 1,2,6, 7 | G 01 S 1/30<br>5/10 |
| X | PROCEEDINGS OF THE NATIONAL ELECTRONICS CONFERENCE, Band 6, 25.-27. September 1950, Seiten 218-226 Oak-Brook, U.S.A.<br>J.W. HAWKINS: "Recent lorac developments"<br>* Insgesamt * | 1,4,5, 7 | |
| X | POLYTECHNISCH TIJDSCHRIFT, Elektrotechniek-Electronica, Band 27, Nr. 24, 22. November 1972, Seiten 798-802 Den Haag, NL.<br>M.P. DE ZWARTE: "Toran-radioplaatsbepalingssysteem"<br>* Figuren 1-3 * | 1,7 | **RECHERCHIERTE SACHGEBIETE (Int. Cl.³)**<br><br>G 01 S |
| X | P. GAUDILLERE: "Radio-mailles", 1958, Imprimerie Spéciale - De Banque - Paris, FR.<br>* Seiten 3,4,6,7,17-22,32,33; Seite 8, Absatz 1.8; Seite 29, Zeilen 13-21; Seite 37, Absatz 4.5; Seiten 43,49, Absatz 6.4; Figuren 1-8,11,14,21 *<br>./. | 1-8 | |

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 10-12-1981 | VAN WEEL |

EPA form 1503.1  06.78

Europäisches
Patentamt

# EUROPÄISCHER RECHERCHENBERICHT

## EINSCHLÄGIGE DOKUMENTE

| Kategorie | Kennzeichnung des Dokuments mit Angabe, soweit erforderlich, der Maßgeblichen Teile | betrifft Anspruch | KLASSIFIKATION DER ANMELDUNG (Int. Cl.³) |
|---|---|---|---|
| | DE - B - 1 161 962 (P. GAUDILLERE) <br> * Spalte 3, Zeile 66 - Spalte 5, Zeile 68; Figuren 1,2 * | 1-4,6 | |
| | US - A - 2 930 037 (D.G. JONES) <br> * Spalte 3, Zeile 67 - Spalte 5, Zeile 68; Figuren 1-3 * | 1,4,5, 7 | |
| | US - A - 4 106 022 (J.D. LAST) <br> * Spalte 7, Zeile 61 - Spalte 8, Zeile 19; Figur 5 * | 8 | RECHERCHIERTE SACHGEBIETE (Int. Cl.³) |
| | EP - A - 0 006 594 (SIEMENS) <br> * Seite 6, Zeile 33 - Seite 7, Zeile 31; Figur 1 * | 8,9 | |
| | THE RADIO AND ELECTRONIC ENGINEER, Band 47, Nr. 6, Juni 1977, Seiten 261-268 <br> London, G.B. <br> J.D. LAST et al.: "Tracer decoder - a receiver for radio navigation relay systems" <br> * Seite 261, linke Spalte, Zusammenfassung; Seite 261, rechte Spalte, Zeile 21 - Seite 263, rechte Spalte, Zeile 6; Figuren 1,2 * | 8,10 | |